# EUROPEAN PATENT APPLICATION

(11) **EP 1 670 236 A2**
(43) Date of publication of application: **14.06.2006**
(21) Application number: 05023441.8
(22) Date of filing: 26.10.2005
(51) Int. Cl.: H04N 1/32

(54) **Image data registration and verification methods and apparatus**

(30) Priority: 07.12.2004 JP 2004353597
(71) Applicant: HITACHI, LTD., Chiyoda-ku Tokyo 100-8280 (JP)
(72) Inventor: Itoh, Shinji, 6-1-1, Marunouchi Chiyoda-ku Tokyo 100 (JP); Honda, Yoshinori, 6-1-1, Marunouchi Chiyoda-ku Tokyo 100 (JP); Tanigawa, Yoshinobu, 6-1-1, Marunouchi Chiyoda-ku Tokyo 100 (JP); Sakai, Mizuhiro, 6-1-1, Marunouchi Chiyoda-ku Tokyo 100 (JP)
(74) Representative: Strehl Schübel-Hopf & Partner

(57) **Abstract**

A character recognition process is executed for image data written with text information, and a digital signature is given to the character recognition results and image data. The digital signature is given to data coupling both digest values of the character recognition results and image data. The digital signature is verified, a character recognition process is executed for the image data, and further a digest value of the character recognition results is calculated and compared with the digest value of the stored character recognition results. The location where both the digest values are incoincident is identified as an alteration position.

## Description

### BACKGROUND OF THE INVENTION

The present invention relates to an image data registration method and apparatus, a registration program and a recording medium recording the registration program, and to an image data verification method and apparatus capable of locating an alteration position if image data is altered, a verification program and a recording medium recording the verification program.

With the development of information technologies, there arises a high need of scanning documents, which have been obligated conventionally to be stored in the form of paper, with a scanner and stores electronic image data. However, there is a problem that as compared to a paper document, electronic image data may be altered without any traces.

To solve this, JP-A-2002-230202 (paragraphs Nos. 0026 - 0031, Fig. 1) discloses an electronic data conversion method and apparatus as a method capable of detecting alteration by signing image data.

JP-B2-3342677 (Canadian Patent CA2307534) "CONTENT DATA JUDGING APPARATUS" discloses a method of locating an alteration position of image data by using digital watermarking technique.

### SUMMARY OF THE INVENTION

An alteration position of a paper document can be located based upon altered traces or different handwriting or ink. However, the method disclosed in JP-A-2002-230202 cannot detect an alteration position although it can detect alteration of electronic image data obtained from a paper document.

The method disclosed in JP-B2-3342677 can detect an alteration position in the unit of block (e.g., 8 x 8 pixels). However, it cannot detect alteration of image data with text information in the unit of item (e.g., if a paper document is a receipt, the item is a name, a date, a money amount and the like).

Prior art is associated with some issues to be solved in the following points: registration of image data with a digital signature capable of verifying a later alteration; and verification capable of locating an alteration position of image data with a digital signature in the unit of item.

The present invention provides an image data registration method and apparatus capable of not only detecting alteration of electronic image data obtained from a paper document but also locating an alteration position, a registration program, a recording medium recording the registration program, a verification method and apparatus capable of locating an alteration position of image data, a verification program capable of locating an alteration position and a recording medium recording the verification program.

An image data registration method of the present invention comprises: an image data acquisition step of acquiring image data containing text areas of one or more items; a text information recognition step of recognizing text information on the text areas in the image data acquired by the image data acquisition step; a digest value calculation step of calculating a digest value of the image data and a digest value of text information of one or more items recognized by the text information recognition step; a signature generation step of generating a digital signature from the digest values calculated by the digest value calculation step; and a record step of recording the image data, the digest values and the digital signatures generated by the signature generation step.

According to the image data registration method, the image data acquisition step acquires image data containing text areas of one or more items, the text information recognition step recognizes text information on the text areas in the acquired image data, and the digest value calculation step calculates a digest value of the image data and a digest value of text information of one or more items recognized by the text information recognition step. The signature generation step generates a digital signature from the digest values of the image data and text information calculated by the digest value calculation step. The digital signature is generated by a private-key known only by an administrator of image data. The record step records the image data, the digest values and the digital signatures generated by the signature generation step.

The image data registration method may further comprise a text information correction step of correcting the recognized text information, wherein: the digest value calculation step further calculates a digest value of the text information corrected by the text information correction step; the signature generation step further generates a digital signature from the digest value calculated by the digest value calculation step for the corrected text information; and the record step further records the digest value of the corrected text information and the digital signature of the digest value.

If the recognized text information has an error, the text information correction step corrects the text information. The digest value calculation step calculates a digest value of the text information corrected by the text information correction step, the signature generation step further generates a digital signature from the digest value of the corrected text information, and the record step further records the digest value of the corrected text information and the digital signature of the digest value.

In the image data registration method, the digest value calculation step preferably uses different digest value calculation methods in accordance with the size of the image data or the recognized or corrected text information.

The size of data changes greatly according to the contents of data. It is therefore preferable to change the calculation method in accordance with the size and calculate the digest value of the information of a similar amount.

In the image data registration method using different digest value calculation methods, in calculating the digest value, the size of the image data or the recognized or corrected text information may be used as the digest value, if the size of the image data or the recognized or corrected text information is smaller than a predetermined value, and an output value of a one-way function input with the size of the image data or the text information may be used as the digest value, if the size of the image data or the text information is equal to or larger than the predetermined value.

If the size of the text information is smaller than the predetermined value, the size is used as the digest value, whereas if the size of the text information is equal to or larger than the predetermined value, an output value of a one-way function input with the size is used as the digest value. Generally, the size of image information is much larger than that of text information. Therefore, in calculating the digest value, it is preferable to lower the size by using an output value of the one-way function, if the size of text information is equal to or larger than the predetermined value. In this case, for example, a hash function may be used as the one-way function.

An image data registration program of the present invention is a program making a computer execute each step of the image registration method. A recording medium of the present invention is a computer readable recording medium recording the registration program.

The registration method can be embodied by providing a registration apparatus with a processing unit corresponding to each step and making each processing unit execute each step.

An image data verification method of the invention comprises: an acquisition step of acquiring image data containing text areas of one or more items, a digest value of text information on the text areas in the image data, and a digital signature of the digest value; a signature verification step of verifying the digital signature acquired by the acquisition step; a text information recognition step of recognizing the text information in the image data; a digest value calculation step of calculating a digest value of the recognized text information; a comparison step of comparing the digest value of the text information acquired by the acquisition step with the digest value of the text information recognized by the text information recognition step; and an alteration position locating step of locating text information as an alteration position, the text information being judged by comparison by the comparison step that the digest value acquired by the acquisition step is incoincident with the digest value recognized by the text information recognition step.

According to the image data verification method, an acquisition unit acquires image data containing text areas of one or more items, a digest value of text information on the text areas in the image data, and a digital signature of the digest value.

The signature verification step verifies the digital signature acquired by the acquisition step. If it is judged that the digital signature is valid, the text information recognition step recognizes the text information on the text areas in the image data. The digest value calculation step calculates a digest value of the recognized text information. The comparison step compares the digest value of the text information acquired by the acquisition step with the digest value of the text information recognized by the text information recognition step. In comparison by the comparison step, the digest value acquired by the acquisition step is an authorized digest value. If this digest value is incoincident with the digest value recognized by the text information recognition step, the alteration position locating step infers that image data was altered and the incoincident text information is identified as an alteration position.

The image data verification method may further comprise a format definition information read step of reading format definition information defining a position of the text information in the image data, wherein the comparison step compares the digest value of the text information recognized by the text information recognition step with the digest value of the text information in the image data acquired based upon the format definition information read by the format definition information read step.

If the image data is image data of a document having a predetermined format, the operation up to recognizing text information can be speeded up by reading the format definition information, more than recognizing characters by designating areas in image data because of the format is indefinite.

In the image data verification method, if the comparison step indicates that the digest value of the text information in the image data acquired by the acquisition step is incoincident with the digest value of the text information recognized by the text information recognition step, an alteration position display step displays the location of the text information in the image data. By displaying the location of the text information having incoincident digest values on the image data, a user of the image data can recognize easily an alteration position of the image data.

An image data verification program of the invention is a program making a computer execute each step of the image data verification method. A recording medium of the invention is a computer readable recording medium recording the verification program.

The verification method can be embodied by providing a verification apparatus with a processing unit corresponding to each step and making each processing unit execute each step.

As described above, a text information recognition (character recognition) process is executed for image data containing text areas, a digital signature is generated from data including text information recognition results, and the image data, stored are the digest values of the character recognition results and image data, and the digital signatures. In verification combined with the digital signature as a counter-operation, the digital signature is verified, and if it is judged that the signature is valid, a character recognition process is executed for the image data. A digest value of the character recognition results is calculated and compared with the stored digest value of the character recognition results. If an incoincident digest value exists, the text area corresponding to the text information having the incoincident digest value is located as the alteration position. In this manner, a work of locating an alteration position can be automated, although visual confirmation is required conventionally. It is possible to considerably shorten the time required for observation works for electronic paper documents.

According to the present invention, it is possible not only to detect alteration of image data but also to locate the position of an altered text area.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 shows an example of the structure of an embodiment of the present invention.
Fig. 2 shows an example of a flow chart illustrating a character recognition process.
Fig. 3 shows an example of format definition information to be used in the character recognition process.
Fig. 4 shows an example of character recognition result data.
Fig. 5 shows an example of a flow chart illustrating a signature generation process.
Fig. 6 shows an example of the format of signature data.
Fig. 7 shows an example of a flow chart illustrating a digest value calculating method.
Fig. 8 shows an example of the format of registration data.
Fig. 9 shows an example of a flow chart illustrating a signature verification process.
Fig. 10 shows an example of a flow chart illustrating alteration position locating.
Fig. 11 shows an example of the format of an incoincidence list.
Fig. 12 shows an example of a flow chart illustrating alteration position display.
Fig. 13 shows an example of the outline of a registration apparatus of an image data registration/storage/verification system shown in Fig. 1.
Fig. 14 shows an example of the outline of a verification apparatus of the image data registration/storage/verification system shown in Fig.
1.

### DETAILED DESCRIPTION OF THE EMBODIMENTS

With reference to the accompanying drawings, description will be made on an image data registration method and verification method capable of locating an alteration position of image data according to the first embodiment of the present invention. In this embodiment, description will be made on a method capable of locating an alteration position of image data of a paper document. This method is not a conventional digital signature method which gives a digital signature only to image data, but a digital signature is generated from both image data and character recognition results of the image data.

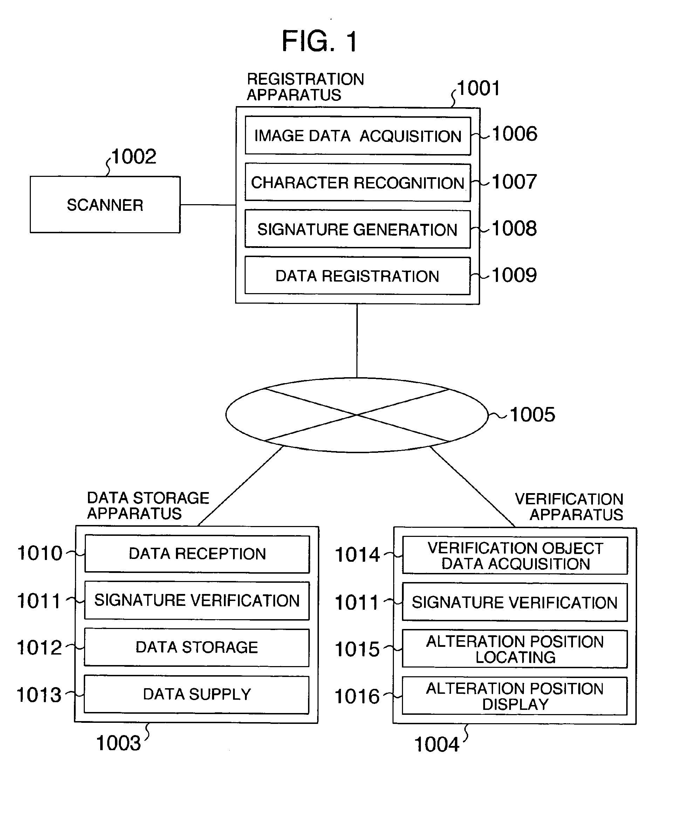

Fig. 1 shows an example of the outline structure of an information processing system which executes a verification method of the embodiment capable of locating an alteration position of image data. Components constituting this system include a scanner 1002, a registration apparatus 1001, a data storage apparatus 1003, a verification apparatus 1004 and a network 1005. In this embodiment, although discrete apparatuses 1001, 1003 and 1004 are used for each function and connected to the network 1005, a single apparatus having functions of a plurality of apparatuses may also be used.

The scanner 1002 is an apparatus for converting information on a paper document into image data. A paper document includes a fixed paper document having a fixed format of each business such as an application form and a contract form, and an unfixed paper document having an unfixed format of each business such as a receipt and a bill.

The registration apparatus 1001, data storage apparatus 1003 and verification apparatus 1004 are each a computer having a CPU, a memory, a storage, a display and a keyboard. The registration apparatus 1001 has functions of image data acquisition 1006, character recognition 1007, signature generation 1008 and data registration 1009. The function of character recognition 1007 performs a character recognition process, i.e., a text information recognition process of reading image data from the scanner 1002 or storage and recognizing text areas contained in the image data. The function of signature generation 1008 signs image data and character recognition results, and registers the image data, character recognition results and signature in the data storage apparatus 1003.

The data storage apparatus 1003 has the functions of data reception 1010, signature verification 1011, data storage 1012 and data supply 1013. The function of data reception 1010 of the data storage apparatus 1003 receives data with a signature from the registration apparatus 1001, and the function of signature verification 1011 performs signature verification. If the signature is valid, the function of data storage 1012 stores the data (image data, character recognition results, signature data) in a storage. If the signature is invalid, the data is not stored and an error message is returned to the registration apparatus 1001. The character recognition results can be used for image data retrieval. If the character recognition results are not necessary, they may not be stored.

The verification apparatus 1004 has the functions of verification object data acquisition 1014, signature verification 1011, alteration position locating 1015, and alteration position display 1016. The function of verification object data acquisition 1014 of the verification apparatus 1004 acquires verification object data (image data, character recognition results, signature data) from the data storage apparatus 1003, and the function of signature verification 1011 verifies the signature of the verification object data. If the verification indicates that the signature is invalid, the function of the alteration position locating 1015 performs an alteration position detection process. The function of alteration position display 1016 visually displays the alteration position of the image data.

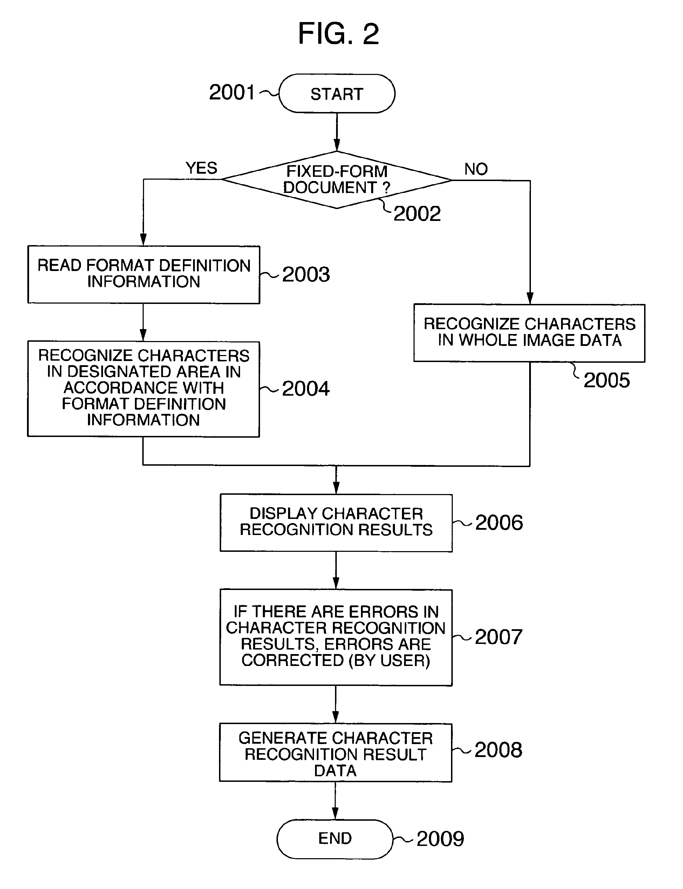

Fig. 2 is a flow chart illustrating a process to be executed by the function of character recognition (text information recognition) 1007 of the registration apparatus 1001. This flow chart corresponds to a text information recognition step of the invention.

Step 2001: Start.

Step 2002: If image data acquired by the function of image data acquisition 1006 is a fixed-form document, the flow advances to Step 2003, whereas if not (unfixed document), the flow advances to Step 2005.

Step 2003: Format definition information is read. The format definition information is information defining the position (range) where character recognition is executed in subsequent Steps and identification information and data format (e.g., numerals, characters, etc.) of the contents written at the position.

Step 2004: Character recognition of a designated area is performed in accordance with format definition information.

Step 2005: Character recognition of the whole image data is performed. The character recognition process is performed in the unit of row, and recognition results of each row are processed as one element.

Step 2006: Character recognition results are displayed to make a user confirm whether characters are correctly recognized. If there is no possibility of erroneous recognition, this Step may be omitted.

Step 2007: If there is any error in the character recognition results, the data is corrected (by a user).

Step 2008: Character recognition result data is generated.

Step 2009: End.

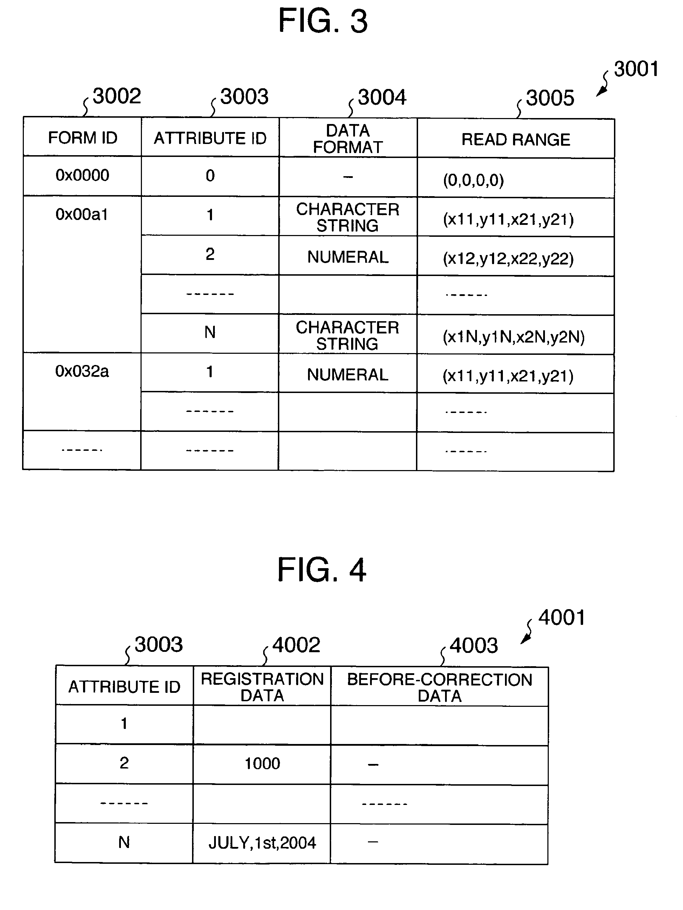

Fig. 3 shows an example of the format of format definition information 3001 at Step 2003. The format definition information 3001 is constituted of a form ID 3002, an attribute ID 3003, a data format 3004 and a read range 3005. The form ID 3002 is information identifying a document format. The form ID 3002 of 0x0000 indicates that the document format is unfixed. The attribute format ID 3003 is an identifier of information to be subjected to character recognition. A name, a date, a money amount and the like are described in a document, and the attribute ID 3003 is information identifying these items. The data format 3004 is type information on each attribute such as a character string and a numeral. The read range 3005 is information representative of a range of image data in which information on each attribute ID 3003 is described. Four values include an X coordinate of a start point, a Y coordinate of the start point, an X coordinate of an end point and a Y coordinate of the end point. The read range 3005 corresponds to the inner area of a rectangle having a diagonal line connecting the start and end points.

Fig. 4 is a diagram showing an example of the format of the character recognition result data 4001 at Step 2008. The character recognition result data 4001 is constituted of an attribute ID 3003, registration data 4002 and before-correction data 4003. In the case of a fixed document, the attribute ID 3003 is an identifier for the contents of recognized data and is related to, for example, a name, a date, a money amount and the like. In the case of an unfixed document, the attribute ID 3003 is a row number. The registration data 4002 corresponds to the character recognition results, and if a user corrects the registration data, this data becomes corrected data. The before-correction data 4003 is data before a user corrects it. If a user does not correct, an empty field is entered (no data).

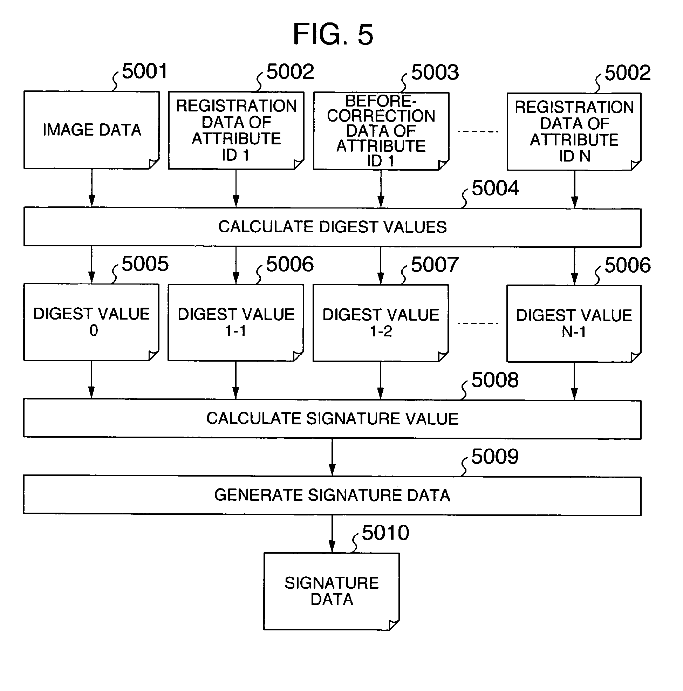

Fig. 5 is a flow chart to be executed by the function of signature generation 1008 of the registration apparatus 1001.

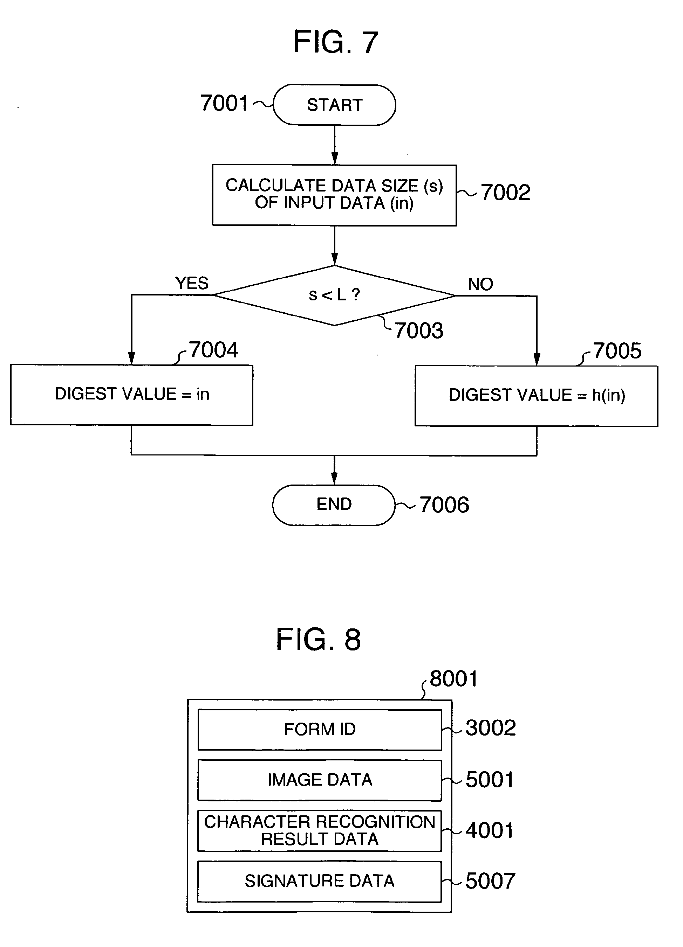

Step 5004: Digest values 5005, 5006 and 5007 are calculated for image data 5001, each attribute registration data 5002 and before-correction data 5003 of the character recognition result data 4001 outputted by the function of character recognition 1007, respectively. The digest value 5007 of the before-correction data 5003 of each attribute is calculated only when data exists (only when a user corrects the character recognition results). Specific contents of digest value calculation will be described later with reference to Fig. 7.

Step 5008: A signature value is calculated for combined data of the digest value 5005 of image data, each attribute ID 3003 of character recognition results, and the digest values 5006 and 5007. The signature value is a value obtained by applying a private-key to the combined data.

Step 5009: Signature data 5010 is generated from the digest values 5005, 5006 and 5007, attribute ID 3003 and signature value.

The flow down to 5007 corresponds to a digest value calculation step, and the lower flow corresponds to a signature generation step.

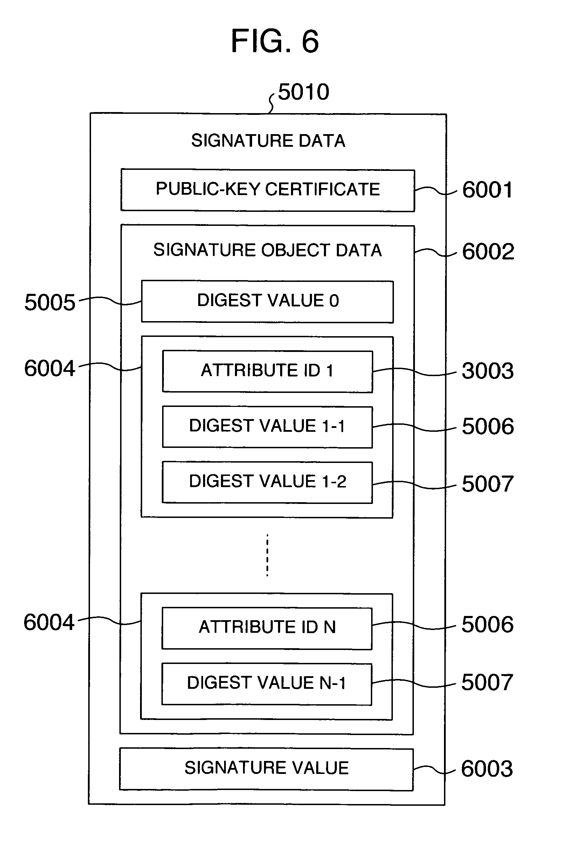

Fig. 6 shows the format of the signature data 5010. The signature data 5010 is constituted of a public-key certificate 6001, signature object data 6002 and a signature value 6003. The public-key certificate 6001 is a certificate of a public-key issued by a certificate authority (including public parties and private parties) and includes the public-key corresponding to the private-key for verifying the signature data 5010, both the keys being used as a pair. The certificate certifies an owner of the public-key. The signature object data 6002 includes the digest value 5005 of image data and recognition results 6004 of each attribute ID 3003 (attribute ID 1 to attribute ID N). The recognition results 6004 of each attribute ID 3003 include each ID i (i = 1 to N) and the digest value 5006 of the registration data 4002. If a user corrects the character recognition results, the recognition results 6004 of each attribute ID 3003 include the digest value 5007 of the before-correction data 4003. Arbitrary data such as time information may be included in the signature object data 6002. Correction of the character recognition results by a user corresponds to a text information correction step of the invention.

Data other than the data shown in Fig. 5 may be included in the signature data 5010. If the public-key certificate 6001, signature object data 6002 and signature value 6003 are related to each other, these may be stored separately. The format of the signature data 5010 may use, for example, the SignedData structure defined by RFC 3369 "Cryptographic Message Syntax" used as the signature standard format.

Fig. 7 is a flow chart illustrating the details of a digest value calculation method at Step 5004.

Step 7001: Start.

Step 7002: A data size (s) of input data (in) is calculated.

Step 7003: If the data size (s) is smaller than a predetermined threshold value (L), the flow advances to Step 7004, whereas if not, the flow advances to Step 7005. Namely, the digest value calculation method differs depending upon the size (input data size) of image data, or recognized or corrected text information.

Step 7004: The digest value is used as the input data (in). Namely, if the size of the input data is smaller than the threshold value (L), the size of the input data is the digest value.

Step 7005: The digest value is calculated as the digest value = h(in). The function h( ) may be a hash function of one-way function.

Step 7006: End.

Fig. 8 shows the format of data 8001 to be transmitted from the function of data registration 1009 of the registration apparatus 1001 to the data storage apparatus 1003. Transmission data 8001 is constituted of the form ID 3002, image data 5001, character recognition result data 4001 and signature data 5010. Data other than the data shown in Fig. 8 such as information for identifying a registrant and a registration date may be included in the transmission data 8001. The data storage apparatus 1003 receives the data transmitted from the registration apparatus 1001, verifies the signature, and if the signature is valid, stores the received data. The function of data registration 1009 corresponds to a recording step of the invention.

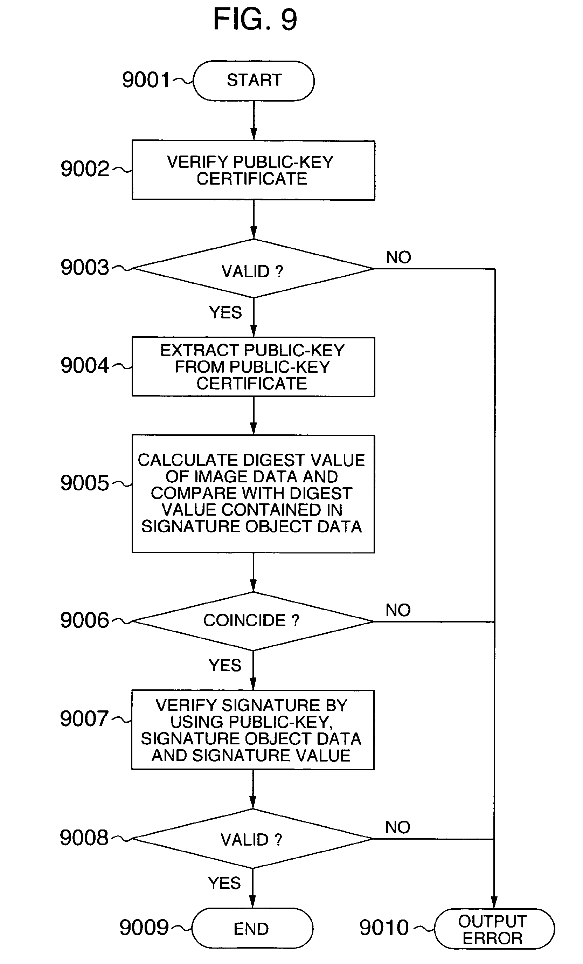

Fig. 9 shows the process sequence of the function of signature verification 1011 of the verification apparatus 1004.

Step 9001: Start.

Step 9002: Verified is the public-key certificate 6001 contained in the signature data 5010.

Step 9003: If the public-key certificate 6001 is valid, the flow advances to Step 9004, whereas if not, the flow skips to Step 9010.

Step 9004: The public-key is extracted from the public-key certificate 6001.

Step 9005: The digest value of the image data 5001 (there is an alteration possibility) is calculated and compared with the digest value 5005 contained in the signature object data 6002.

Step 9006: If the digest values are coincident at Step 9005, the flow advances to Step 9007, whereas if not, the flow skips to Step 9010.

Step 9007: The signature is verified by using the public-key, signature object data 6002 and signature value 6003. Namely, the signature value 6003 is analyzed by using an extracted public-key to decode the data coupling the digest value 5005 of the original image data, each attribute ID 3003 and digest values 5006 and 5007 of the character recognition results. The decoded digest value 5005, each attribute ID 3003 and digest values 5006 and 5007 of the character recognition results are compared with the digest value 5005, each attribute ID 3003 and its digest values 5006 and 5007 of the image data 5001 respectively contained in the signature object data 6002 to thereby verify whether the signature is valid or invalid (if coincident, the signature is judged to be valid).

Step 9008: If the signature is valid, the flow advances to Step 9009, whereas if not, the flow advances to Step 9010.

Step 9009: (Normal) End.

Step 9010: An error is outputted if the public-key certificate 6001 is invalid at Step 9003 or the digest values are not coincident at Step 9006.

If the function of signature verification 1011 of the data storage apparatus 1003 outputs an error (Step 9008), the received data is discarded and an error message is returned to the registration apparatus 1001. In the case of a normal end, the received data is recorded in the data storage apparatus 1003 by the function of data storage 1012. The data storage apparatus 1003 has the function of data supply 1013. The function of data supply 1013 is a function of transmitting data stored in the data storage apparatus 1003 in response to a request from another computer. The other computer (e.g., verification apparatus 1004) can refer to the data stored in the data storage apparatus 1003. The function of data supply 1013 may have a user authentication function and an access control function to limit users capable of accessing data.

The function of verification object data acquisition 1014 of the verification apparatus 1004 acquires the verification object data (image data 5001, character recognition result data 4001 and signature data 5010) from the data storage apparatus 1003. By using the acquired data, the functions of signature verification 1011 and alteration position locating 1015 are executed by the verification apparatus 1004. The function of signature verification 1011 is executed in the same database order as that of the flow chart shown in Fig. 9. If the function of signature verification 1011 indicates an error, the function of alteration position locating 1015 is executed. If the function of alteration position locating 1015 indicates that there are one or more values in the alteration list, the function of alteration position display 1016 is executed in accordance with the value or values to display alteration positions.

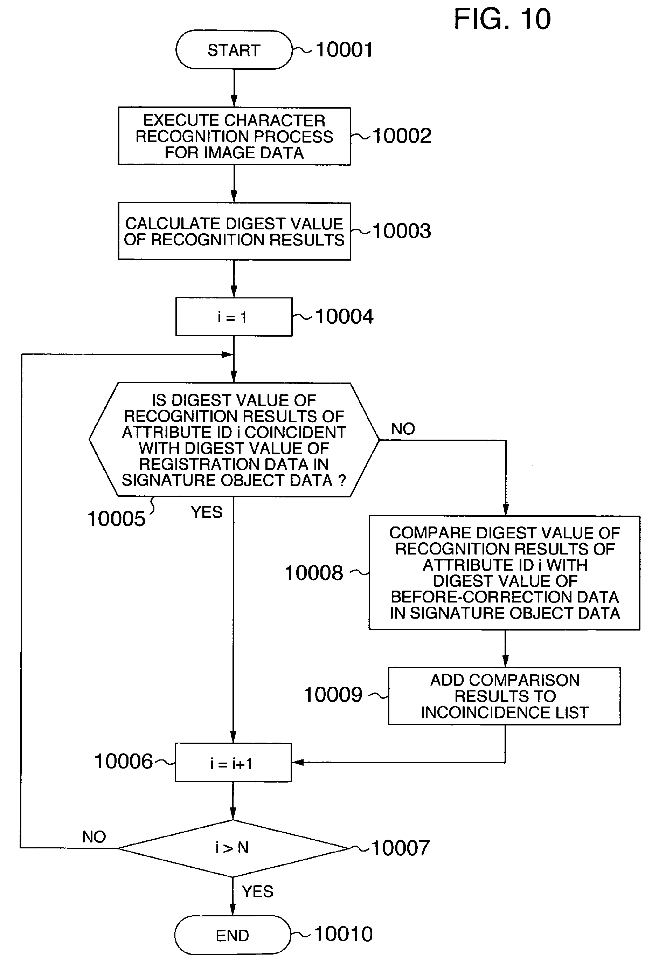

Fig. 10 shows a process sequence to be executed by the function of alteration position locating 1015.

Step 10001: Start.

Step 10002: A character recognition process is executed for the image data 5001. The character recognition process is the character recognition process shown in Fig. 2 excluding the processes at Step 2006 (display of character recognition results) and at Step 2007 (correction of recognition results by a user). The character recognition result data 4001 generated at Step 2008 has empty fields of all before-correction data 4004.

Step 10003: The digest value of the recognition results is calculated.

Step 10004: An internal variable is set to i = 0.

Step 10005: It is confirmed whether the digest value of the recognition results of the attribute ID i is coincident with the digest value 5006 of registration data in the signature object data 6002. If coincident, the flow advances to Step 10006, whereas if not, the flow advances to Step 10008.

Step 10006: The internal variable is set to i = i + 1.

Step 10007: if i > N, the flow advances to Step 10010, whereas if not, the flow returns to Step 10005. N is the number of recognition result sets and is coincident with the number of attribute IDs of the character recognition result data 4001.

Step 10008: The digest value of the recognition results of the attribute ID i is compared with the digest value 5007 of the before-correction data in the signature object data 6002.

Step 10009: The comparison results are added to an incoincidence list. If the digest value 5007 of the before-correction data does not exist, it is judged as incoincidence.

Step 10010: End.

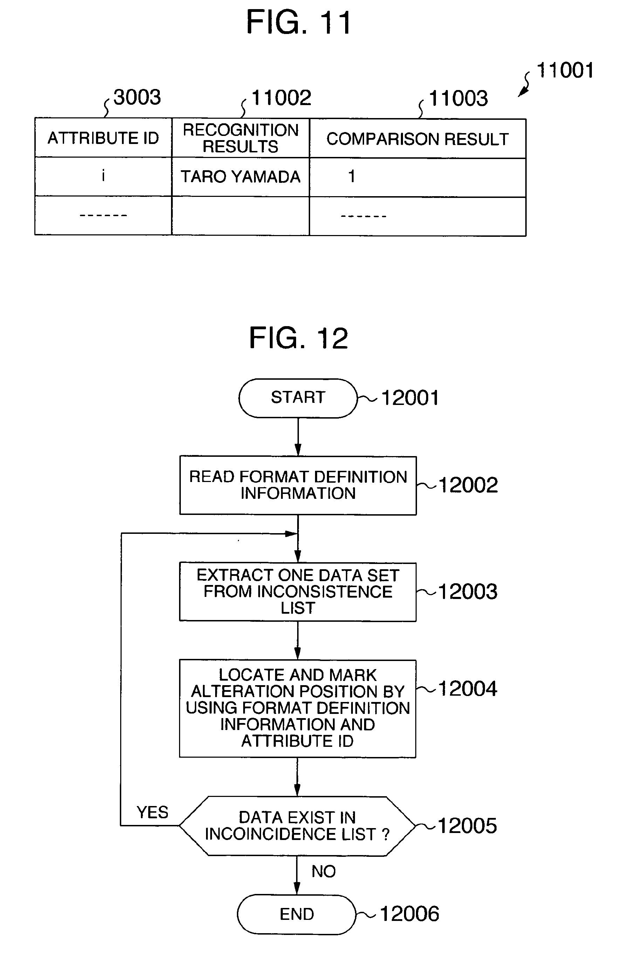

Fig. 11 shows an example of the format of the incoincidence list 11001 created by the function of alteration position locating 1015. The incoincidence list 11001 includes an attribute ID 3003, a recognition result 11002 and a comparison result 11003. The recognition results 11002 are the character recognition results at Step 10002. The comparison result 11003 is "1" if comparison shows that the digest value 5007 of the before-correction data is coincident with the digest value of the recognition results 11002, and "0" if the digest values are incoincident.

If the before-correction data does not exist, it takes "0".

Fig. 12 is a flow chart showing an example of the process sequence to be executed by the function of alteration position display 1016.

Step 12001: Start.

Step 12002: The format definition information 3001 is read.

Step 12003: One data set is extracted from the incoincidence list 11001. The data is extracted in the unit of row of the incoincidence list 11001 shown in Fig. 11. The extracted data is deleted from the incoincidence list 11001.

Step 12004: In accordance with the format definition information 3001 and attribute ID, the position on image data described as which position is information on the attribute, is located and marked. The mark is formed so that a user can visually recognize the position, such as surrounding the position with a frame. Different colors may be used depending upon a difference between comparison results 11003. If the comparison result 11003 is "1", there is a possibility that the character recognition process is erroneous, and confirmation is obtained from the user. If the comparison result is "0", an alteration possibility is very high so that an alteration message is displayed on the screen.

Step 12005: If data is left in the inconsistence list 11001, the flow returns to Step 12003, whereas if not, the flow advances to Step 12006.

Step 12006: End.

With this process sequence, a digital signature is given to image data by the character recognition process, and the character recognition process is executed again during verification to compare the signatures, so that the alteration position of image data can be located. Although a data amount increases more than that of prior art because of addition of the alteration position locating function, an increase in the data amount is small as compared with an image data amount, not posing a practical problem.

By applying this embodiment, it becomes possible not only to locate an alteration position but alto to recover data. Each attribute (name, date, money amount, etc.) does not take a random value. The "name" has a possibility that it is coincident with a past registered "name". The "date", "money amount" and etc. can fall in a range narrowed to some extent. In the case of the "name", all "names" registered in the database are extracted, and the digest value of each "name" is calculated and compared. If the calculated digest value is coincident with the digest value in the signature data 5010, the calculated digest value is correct data. Similarly, the digest values of the "date" and "money amount" are calculated in a narrowed range and compared so that data can be recovered.

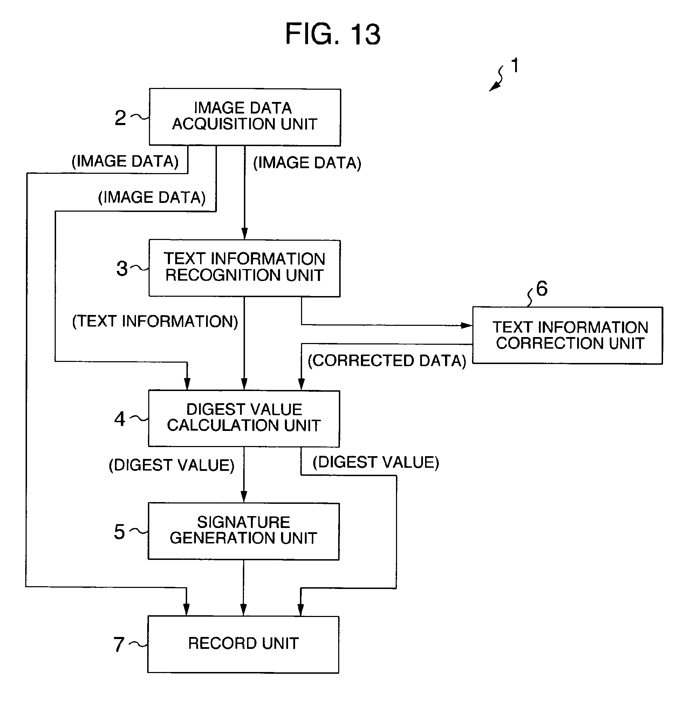

Fig. 13 shows an example of the outline of a registration apparatus in the registration/storage/verification system for image data shown in Fig. 1. A registration apparatus 1 for image data has: an image data acquisition unit 2 for acquiring image data which contains text areas of one or more items; a text information recognition unit 3 for recognizing text information on the text areas in the image data acquired by the image data acquisition unit 2; a digest value calculation unit 4 for calculating a digest value of image data acquired by the image data acquisition unit 2 and a digest value of each text information recognized by the text information recognition unit 3; and a signature generation unit 6 for generating a digital signature from the digest values calculated by the digest value calculation unit 4. If the text information recognized by the text information recognition unit 3 has an error, a text information correction unit 6 corrects the error, and the corrected text information is sent to the digest value calculation unit 4. A record unit 7 records the image data acquired by the image data acquisition unit 2, digest value calculated by the digest value calculation unit 4 and digital signature generated by the signature generation unit.

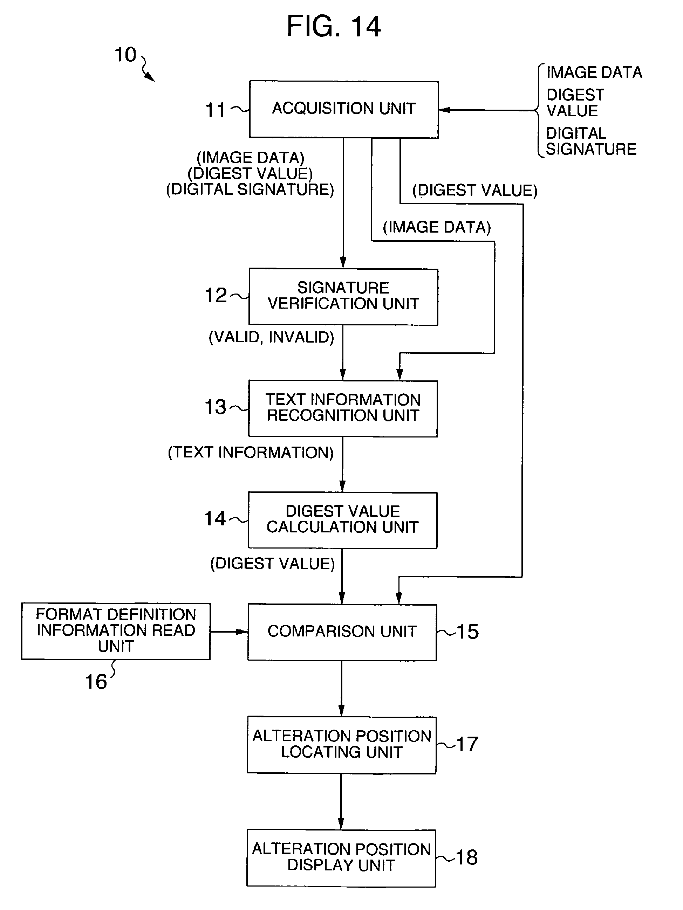

Fig. 14 shows an example of the outline of a verification apparatus of the registration/storage/verification system for image data shown in Fig. 1. A verification apparatus 10 for image data shown in Fig. 14 has an acquisition unit 11 which acquires image data containing text areas of one or more items, digest values calculated by the digest value calculation unit 4, and a digital signature generated by the signature generation unit 5. The verification unit 10 has also: a signature verification unit 12 for verifying a digital signature acquired by the acquisition unit 11; a text information recognition unit 13 for recognizing text information on the text area in image data acquired by the acquisition unit 11; and a digest value calculation unit 14 for calculating a digest value of the text information recognized by the text information recognition unit 13. The verification unit 10 has also a comparison unit 15 for comparing the digest value of text information acquired by the acquisition unit 11 with the digest value of the text information recognized by the text information recognition unit 13. If a paper document is written in a fixed sheet, the format definition information of the fixed sheet is read from a format definition information read unit 16, and the comparison unit 15 is supplied with the information on the digest value. The verification apparatus 10 has also: an alteration position locating unit 16 for locating text information as an alteration position, if the digest value of the text information acquired by the acquisition unit 11 for comparison at the comparison unit 15 is incoincident with the digest value of the text information recognized by the test information recognition unit 13 for the corresponding text area; and an alteration position display unit 17 for displays the alteration position located by the alteration position locating unit 16 on the image data.

An image data verification method can be embodied as an image data verification program capable of making a computer execute each step of the method which includes: an acquisition step of acquiring image data, a digest value of text information in the image data, and a digital signature given to the digest value; a signature verification step of verifying a digital signature; a text information recognition step of recognizing text information; a digest value calculation step of calculating a digest value of the text information; and an alteration position locating step for locating an alteration position if both the digest values are incoincident.

Such a program may be made commercially available in the state that the program is recorded in a recording medium such as a CD-ROM and a DVD-ROM. Program data may be made downloadable from a public line such as the Internet, to make a user purchase the program data. It is apparent that the program for the image data verification method may have a format definition information read step of reading format definition information defining text information in image data, or may further have an alteration position display step of displaying a location of the text information on the image data, if both the digest values are incoincident.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. An image data registration method comprising:
an image data acquisition step of acquiring image data containing text areas of one or more items;
a text information recognition step of recognizing text information on the text areas in the image data acquired by the image data acquisition step;
a digest value calculation step of calculating a digest value of the image data and a digest value of text information of one or more items recognized by the text information recognition step;
a signature generation step of generating a digital signature from the digest values calculated by the digest value calculation step; and
a record step of recording the image data, the digest values and the digital signatures generated by the signature generation step.

2. The image data registration method according to claim 1, further comprising a text information correction step of correcting the recognized text information, wherein:
the digest value calculation step further calculates a digest value of the text information corrected by the text information correction step;
the signature generation step further generates a digital signature from the digest value calculated by the digest value calculation step for the corrected text information; and
the record step further records the digest value of the corrected text information and the digital signature of the digest value.

3. The image data registration method according to claim 1, wherein the digest value calculation step uses different digest value calculation methods in accordance with a size of the image data or the recognized or corrected text information.

4. The image data registration method according to claim 3, wherein in calculating the digest value, the size of the image data or the recognized or corrected text information is used as the digest value, if the size of the image data or the recognized or corrected text information is smaller than a predetermined value, an output value of a one-way function input with the size of the image data or the text information is used as the digest value, if the size of the image data or the text information is equal to or larger than the predetermined value.

5. A computer program product for registering image data, the computer program product comprising:
code that acquires image data containing text areas of one or more items;
code that recognizes text information on the text areas in the acquired image data;
code that calculates a digest value of the acquired image data and a digest value of recognized text information of one or more items ;
code that generates a digital signature from the calculated digest values digest value ;
code that records the acquired image data, the calculated digest values and the generated digital signatures ; and
a computer usable medium for embodying the codes.

6. An image data registration apparatus comprising:
an image data acquisition unit (2) for acquiring image data containing text areas of one or more items;
a text information recognition unit (3) for recognizing text information on the text areas in the image data acquired by the image data acquisition unit;
a digest value calculation unit (4) for calculating a digest value of the image data and a digest value of text information of one or more items recognized by the text information recognition unit;
a signature generation unit (5) for generating a digital signature from the digest values calculated by the digest value calculation unit; and
a record unit (7) for recording the image data, the digest values and the digital signatures generated by the signature generation unit.

7. The image data registration apparatus according to claim 6, further comprising a text information correction unit (6) for correcting the recognized text information, wherein:
the digest value calculation unit (4) further calculates a digest value of the text information corrected by the text information correction unit;
the signature generation unit (5) further generates a digital signature to the digest value calculated by the digest value calculation unit for the corrected text information; and
the record unit (7) further records the digest value of the corrected text information and the digital signature of the digest value.

8. The image data registration apparatus according to claim 6, wherein the digest value calculation unit uses different digest value calculation methods in accordance with a size of the image data or the recognized or corrected text information.

9. The image data registration apparatus according to claim 8, wherein the digest value calculation unit uses as the digest value the size of the image data or the recognized or corrected text information, if the size of the image data or the recognized or corrected text information is smaller than a predetermined value, and uses as the digest value an output value of a one-way function input with the size of the image data or the text information, if the size of the image data or the text information is equal to or larger than the predetermined value.

10. An image data verification method comprising:
an acquisition step of acquiring image data containing text areas of one or more items, a digest value of text information on the text areas in the image data, and a digital signature of the digest value;
a signature verification step of verifying the digital signature acquired by the acquisition step;
a text information recognition step of recognizing the text information in the image data;
a digest value calculation step of calculating a digest value of the recognized text information;
a comparison step of comparing the digest value of the text information acquired by the acquisition step with the digest value of the text information recognized by the text information recognition step; and
an alteration position locating step of locating text information as an alteration position, the text information being judged by comparison by the comparison step that the digest value acquired by the acquisition step is incoincident with the digest value recognized by the text information recognition step.

11. The image data verification method according to claim 10, further comprising a format definition information read step of reading format definition information defining a position of the text information in the image data, wherein:
the comparison step compares the digest value of the text information recognized by the text information recognition step with the digest value of the text information in the image data acquired from the format definition information read by the format definition information read step.

12. The image data verification method according to claim 10, further comprising an alteration position display step of displaying a location of the text information on the image data, if the comparison step indicates that the digest value of the text information in the image data acquired by the acquisition step is incoincident with the digest value of the text information recognized by the text information recognition step.

13. A computer program product for verifying image data, the computer program product comprising:
code that acquires image data containing text areas of one or more items, a digest value of text information on the text areas in the image data, and a digital signature of the digest value;
code that verifies the acquired digital signature;
code that recognizes the text information in the image data;
code that calculates a digest value of the recognized text information;
code that compares the digest value of the acquired text information with the digest value of the recognized text information;
code that locates text information as an alteration position, the text information being judged by the comparison that the acquired digest value is incoincident with the recognized digest value; and
a computer usable medium for embodying the codes.

14. An image data verification apparatus comprising:
an acquisition unit (11) for acquiring image data containing text areas of one or more items, a digest value of text information on the text areas in the image data, and a digital signature of the digest value;
a signature verification unit (12) for verifying the digital signature acquired by the acquisition unit;
a text information recognition unit (13) for recognizing the text information in the image data;
a digest value calculation unit (14) for calculating a digest value of the recognized text information;
a comparison unit (15) for comparing the digest value of the text information acquired by the acquisition unit with the digest value of the text information recognized by the text information recognition unit; and
an alteration position locating unit (17) for locating text information as an alteration position, the text information being judged by comparison by the comparison unit that the digest value acquired by the acquisition unit is incoincident with the digest value recognized by the text information recognition unit.

15. The image data verification apparatus according to claim 14, further comprising a format definition information read unit for reading format definition information defining a position of the text information in the image data, wherein:
the comparison unit compares the digest value of the text information recognized by the text information recognition unit with the digest value of the text information in the image data acquired from the format definition information read by the format definition information read unit.

16. The image data verification apparatus according to claim 14, further comprising:
an alteration position display unit (18) for displaying a location of the text information on the image data, if the comparison unit indicates that the digest value of the text information in the image data acquired by the acquisition unit is incoincident with the digest value of the text information recognized by the text information recognition unit.
